# EUROPÄISCHE PATENTSCHRIFT

(11) **EP 3 062 946 B1**
(45) Veröffentlichungstag und Bekanntmachung des Hinweises auf die Patenterteilung: **09.10.2019**
(21) Anmeldenummer: 14825243.0
(22) Anmeldetag: 27.10.2014
(51) Int. Cl.: B22F 3/03, B30B 11/04, B22F 3/02, B30B 11/00, B28B 1/48, B22F 3/24

(54) **PRESSENANORDNUNG MIT NACHBEARBEITUNGSMODUL**
PRESS WITH A POST-MACHINING MODUL
PRESSE AVEC UN MODULE DE POST-USINAGE

(30) Priorität: 31.10.2013 AT 3562013 U
(43) Veröffentlichungstag der Anmeldung: 07.09.2016
(73) Patentinhaber: Ceratizit Austria Gesellschaft M.b.H., 6600 Reutte (AT)
(72) Erfinder: SINGER-SCNÖLLER, Alexander, A-6671 Weißenbach (AT); STORF, Markus, A-6600 Wängle (AT); WEBER, Adrian, 87448 Waltenhofen/Hegge (DE)
(74) Vertreter: Ciesla, Dirk
(86) Internationale Anmeldenummer: PCT/AT2014/000194
(87) Internationale Veröffentlichungsnummer: WO 2015/061815

(56) Entgegenhaltungen:
- EP-A1- 0 241 833
- CN-U- 202 805 687
- GB-A- 603 123
- JP-A- H07 148 597
- JP-A- 2000 071 099
- JP-A- 2010 007 132
- US-A1- 2007 062 023
- US-A1- 2008 196 604
- US-A1- 2009 169 412

## Beschreibung

Die Erfindung betrifft eine Pressenanordnung mit Nachbearbeitungsmodul und ein Verfahren zur Herstellung und Bearbeitung von Presslingen aus Pulvermaterial.

DE 10 2006 020 213 A1 offenbart eine Presse zur Herstellung von Presslingen aus Pulvermaterial mit Hinterschnitten. An einem Pressengestell ist eine Matrize angeordnet in der ein Formhohlraum mit Hinterschneidung ausgebildet ist. Ein Ober- und ein Unterstempel wirken mit dem Formhohlraum zusammen. Der Formhohlraum ist durch mindestens einen Schieber, Querpressstempel oder ein bewegliches Teil der Matrize begrenzt, die quer zur vertikalen Hauptpressachse von Ober- und Unterstempel verschiebbar sind. Ein Sensor misst die Ist-Zustände eines Verstellantriebs für Schieber, Querpressstempel und verschiebbaren Matrizenteil, wobei die Ist-Zustände in einer Regelvorrichtung mit einem Sollwert verglichen werden.

GB 603,123 A beschreibt eine Vorrichtung zur Ausbildung von Löchern in Objekten aus gepresstem Metallpulver.

Es ist Aufgabe der Erfindung, eine Pressenanordnung und ein Verfahren bereitzustellen, die bzw. das eine verbesserte Bearbeitung von Presslingen aus Pulvermaterial bereitstellt.

Die erfinderische Pressenanordnung und -verfahren werden durch die beigefügten Ansprüche definiert.

Diese Aufgabe wird mit den Merkmalen des Anspruchs 1 bzw. 14 gelöst. Vorteilhafte Ausgestaltungen sind Gegenstand der Unteransprüche.

Es wird eine Pressenanordnung mit Nachbearbeitungsmodul zur Herstellung und Bearbeitung von Presslingen aus Pulvermaterial bereitgestellt. Beispielsweise zur Herstellung von Presslingen für Schneidwerkzeuge (z.B. Wendeschneidplatten) aus metallischen Werkstoffen, Hartmetall, Cermet oder keramischen Werkstoffen. Bei Hartmetall und Cermet handelt es sich um Werkstoffe, bei denen Hartstoffteilchen in einer Matrix aus einem duktilen Binder eingebettet sind. Die Pressenanordnung weist ein Pressengestell auf, an dem eine Presseinheit zum Pressen eines Presslings aus Pulvermaterial angeordnet bzw. befestigt ist. Die Presseinheit weist eine Matrize mit einem Hohlraum zur Aufnahme von (zu pressendem) Pulvermaterial auf, sowie zumindest zwei Stempel, die zusammen mit dem Hohlraum eine Pressform für einen Pressling bereitstellen. Zumindest eine (z.B. pneumatisch, elektrisch oder hydraulisch angetriebene) Antriebseinheit ist bereitgestellt, um zumindest einen Stempel relativ zu zumindest einem zweiten Stempel entlang einer Hauptpressachse zu verfahren. Wenn die Stempel aufeinander zu gefahren werden, wird auf ein in den Hohlraum eingefülltes Pulvermaterial Druck ausgeübt, so dass das Pulver zu einem Pressling zusammengepresst wird. Wenn die Stempel relativ zueinander auseinander fahren, kann der Pressling aus der Presseinheit entnommen werden. Beispielsweise ist die Hauptpressachse vertikal ausgerichtet und es sind mindestens ein Oberstempel und ein Unterstempel bereitgestellt, die zum Pressen zumindest teilweise in den Hohlraum einfahren und das im Hohlraum angeordnete Pulvermaterial zusammenpressen. Die Matrize kann einteilig sein, so dass ein Pressling nach dem Pressen nach unten oder nach oben aus dem Hohlraum entformt wird. Alternativ kann die Matrize mehrteilig ausgebildet sein, wobei zum Entformen des Presslings die einzelnen Teile der segmentierten Matrize beispielsweise radial nach außen verfahren werden können.

Die Pressenanordnung weist ein Nachbearbeitungsmodul mit zumindest einer Bearbeitungseinheit zur zerspanenden Bearbeitung eines Presslings auf. Beispielsweise zumindest eine Bohreinheit, eine Fräseinheit oder eine Schleifeinheit oder eine beliebige Kombination mehrerer gleicher oder verschiedener Bearbeitungseinheiten. Die Pressenanordnung mit dem Nachbearbeitungsmodul wird mittels einer Steuerung gesteuert. Die Steuerung kann dabei eine einheitliche Steuereinheit der Pressenanordnung sein, die entsprechend auch für die Nachbearbeitung ausgebildet ist, oder es ist z.B. auch möglich, dass für den Pressvorgang und die Nachbearbeitung separate Teil-Steuerungen vorgesehen sind. In dem letztgenannten Fall weist die Steuerung somit mehrere Teil-Steuerungen auf, wobei die Teil-Steuerungen z.B. miteinander funktionell gekoppelt sein können oder auch unabhängig voneinander sein können. Die Steuerung (z.B. eine erste Teil-Steuerung der Steuerung) ist ausgebildet, einen Pressling nach einem Pressvorgang aus der Matrize zu Entformen und nach dem Entformen zwischen den zumindest zwei Stempeln eingespannt zu halten, d.h. mit einer vorgegebenen Haltekraft bzw. Spannkraft zwischen den Stempeln zu halten. Die zumindest zwei Stempel sichern die Position des Presslings. Das Entformen des Presslings kann beispielsweise im Abzugsverfahren erfolgen, bei dem nur die Matrize nach unten fährt und die Stempel auf ihrer Position bleiben. Eine Alternative dazu ist das Ausstoßverfahren, bei dem die Matrize stehenbleibt und die zumindest zwei Stempel gemeinsam nach oben oder nach unten fahren.

Die Steuerung (z.B. auch eine zweite Teil-Steuerung der Steuerung) ist weiterhin dazu ausgebildet, einen aus der Matrize entformten Pressling, der zwischen den zumindest zwei Stempeln eingespannt gehalten ist, mit der zumindest einen Bearbeitungseinheit zerspanend zu bearbeiten. Außer einem vollständigen Entformen vor dem Beginn der Bearbeitung ist es z.B. auch möglich, den Pressling vor der Bearbeitung zunächst nur teilweise aus der Matrize zu entformen. Beispielsweise können nach dem Pressen und zumindest teilweisen Entformen Strukturen in den Pressling eingebracht werden, bei denen die herkömmliche Presstechnik an Grenzen stößt, wie z.B. bei Tangentialwendeplatten mit dünnen Wandstärken. Ein weiteres Beispiel einer zerspanenden Bearbeitung ist eine Fräsbearbeitung, beispielweise zum Einbringen von Gewindebohrungen oder Kühlkanalbohrungen. Insbesondere können mit der oben beschriebenen Pressenanordnung Hinterschneidungen und andere Strukturen nachträglich erzeugt werden.

D.h. es ist keine (aufwändige) segmentierte Matrize zur Erzeugung von Hinterschneidungen notwendig. Zusammenfassend werden viele zusätzliche Optionen durch die oben beschriebene Nachbearbeitung (vor dem Sintern) zum herkömmlichen Direktpressen bereitgestellt, die sonst z.B. nur durch Spritzgusstechnik realisierbar wären.

Bei der Fertigung pulvermetallurgischer Produkte wird durch das Pressen die Form des (End-)Produkts erzeugt, indem das Pulver zu einem Pressling bzw. Grünling verdichtet wird. Erst beim nachfolgenden Sintern des Presslings wird zwischen den verpressten Pulverkörnchen eine feste Verbindung hergestellt. D.h. nach dem Pressen (vor dem Sintern) ist der Pressling empfindlich gegenüber mechanischer Beschädigung. Bei der oben beschriebenen Pressenanordnung mit Nachbearbeitungsmodul wird der Pressling direkt anschließend an den Pressvorgang in der Pressenanordnung bearbeitet, ohne dass der Pressling umgespannt werden muss, so dass das Risiko einer Beschädigung deutlich verringert ist.

Die effektive Kraft, d.h. die Haltekraft oder Spannkraft, die den Pressling spannt, kann durch die Antriebseinheit der Pressenanordnung bereitgestellt werden. Die beispielsweise pneumatisch, elektrisch oder hydraulisch erzeugte Spannkraft, die über die zumindest zwei Stempel auf den Pressling wirkt, ist über die Steuerung steuerbar und/oder regelbar, beispielsweise direkt über eine gewählte Kraft. Vorzugsweise weist die zumindest eine Bearbeitungseinheit eine Bohreinheit, eine Fräseinheit oder eine Schleifeinheit auf. Beispielsweise sind zwei Bearbeitungseinheiten auf gegenüberliegenden Seiten der (Haupt-)Pressachse vorgesehen, um zeitsparend den Pressling von zwei Seiten zu bearbeiten. Alternativ oder zusätzlich weist zumindest eine Bearbeitungseinheit einen Werkzeugträger auf, der mit verschiedenen Werkzeugen bestückbar ist, so dass ein Pressling flexibel mit mehreren Werkzeugen von nur einer Bearbeitungseinheit bearbeitet werden kann.

Vorzugsweise ist das Nachbearbeitungsmodul am Pressengestell angeordnet bzw. befestigt. Dadurch wird eine sichere Anbindung des Nachbearbeitungsmoduls an die Pressenanordnung bereitgestellt. Alternativ weist das Nachbearbeitungsmodul einen Modulgrundkörper oder ein Modulgestell auf zur Lagerung der zumindest einen Bearbeitungseinheit. Das Modulgestell kann z.B. neben dem Pressengestell angeordnet bzw. aufgestellt werden. Dadurch kann das Nachbearbeitungsmodul zur Bearbeitung eines Presslings je nach Bedarf an einer frei wählbaren Seite der Presseinheit angeordnet werden.

Bevorzugt weist das Nachbearbeitungsmodul zumindest einen Manipulator bzw. einen Roboterarm auf, an dessen Arbeitsende die zumindest eine Bearbeitungseinheit angeordnet ist. Der Manipulator, beispielsweise ein schwenk- und/oder ausfahrbarer Arm, kann am Pressengestell oder Modulgrundkörper gelagert sein und mittels der Steuerung gesteuert werden. Der Manipulator kann beispielsweise 6-achsig ausgebildet sein bzw. er weist sechs Freiheitsgrade auf, so dass die Bearbeitungseinheit einem eingespannten Pressling unter beliebigen Winkeln zugestellt werden kann. Beispielsweise kann der Manipulator auf einer Linearführung oder auf einer Ringführung um die Hauptpressachse angeordnet sein, so dass er einem eingespannten Pressling einfach zugestellt werden kann.

Vorzugsweise weist das Nachbearbeitungsmodul zumindest eine Antriebseinheit und zumindest eine Führungseinheit zum Zustellen der zumindest einen Bearbeitungseinheit zu einem eingespannten Pressling auf. Beispielsweise ist eine Führungseinheit als Linearführung mit Schlitten ausgebildet, auf dem eine Bohreinheit befestigt ist. Beispielsweise ist eine hydraulisch, elektrisch oder pneumatisch angetriebene Antriebseinheit vorgesehen.

Gemäß einer bevorzugten Ausgestaltung weist das Nachbearbeitungsmodul eine erste Führungseinheit zum Verfahren der zumindest einen Bearbeitungseinheit in eine erste Richtung auf und eine zweite Führungseinheit zum Verfahren der zumindest einen Bearbeitungseinheit in eine nicht parallel zur ersten Richtung verlaufende zweite Richtung. Dadurch ist die Bearbeitungseinheit in einer Ebene, z.B. der X-Y-Ebene senkrecht zur Hauptpressachse, frei verfahrbar. Mit einer solchen 2-Wege-gesteuerten Bearbeitungseinheit kann beispielsweise ein Pressling auf einer Höhe bearbeitet werden. Wenn beispielsweise eine Presseinheit vorgesehen ist, bei der ein Pressling mittels der Stempel nach oben oder unten aus der Matrize entformt wird (in Richtung der Hauptpressachse bzw. in Z-Richtung), kann durch eine kombinierte Bewegung der beiden Stempel bzw. des Presslings in Z-Richtung und einer Führung in X-Y-Ebene ein eingespannter Pressling in jeder Höhe bearbeitet werden. Beispielsweise kann an jeder beliebigen (zugänglichen) Stelle eine Bohrung hergestellt werden. Alternativ ist die Bearbeitungsebene unter einem beliebigen Winkel zur Hauptpressachse angeordnet. Beispielsweise verläuft die Bearbeitungsebene parallel zur Hauptpressachse bzw. eine Führungseinheit stellt eine Verfahrbarkeit in Richtung der Hauptpressachse (Z-Achse) bereit.

Bevorzugt weist das Nachbearbeitungsmodul eine dritte Führungseinheit zum Verfahren der zumindest einen Bearbeitungseinheit in eine nicht parallel zur ersten und zweiten Richtung verlaufende dritte Richtung auf. Beispielsweise in eine dritte Richtung senkrecht zur ersten und zweiten Richtung, so dass wie oben beschrieben ein Pressling in jeder Höhe bearbeitet werden.

Besonderes bevorzugt weist das Nachbearbeitungsmodul ein Schwenkgelenk auf, um die zumindest einen Bearbeitungseinheit um eine Schwenkachse zu schwenken. Beispielsweise um eine Schwenkachse senkrecht zur Pressachse. Dadurch kann ein eingespannter Pressling unter beliebig einstellbarem Winkel bearbeitet werden.

Vorzugsweise weist das Nachbearbeitungsmodul eine am Pressengestell gelagerte Rotationsführung auf, auf der die zumindest eine Bearbeitungseinheit angeordnet ist. Mittels der Rotationsführung ist die Bearbeitungseinheit drehbar um die Hauptpressachse gelagert, so dass die Bearbeitungseinheit umlaufend an beliebiger Stelle einem Pressling zugestellt werden kann. Vorzugsweise ist die Rotationsachse parallel zu Pressachse ausgebildet.

Gemäß einer bevorzugten Ausgestaltung weist das Nachbearbeitungsmodul zumindest zwei einem Pressling zustellbare Bearbeitungseinheiten auf. Vorteilhaft sind zwei Bearbeitungseinheiten vorgesehen, die bezüglich der Pressachse diagonal oder symmetrisch gegenüberliegend angeordnet sind, so dass ein Pressling schnell und effektiv gleichzeitig von beiden bzw. mehreren Seiten bearbeitet werden kann. Beispielsweise ist mittels der ersten Bearbeitungseinheit ein erster Bereich eines eingespannten Presslings bearbeitbar, während mit der zweiten Bearbeitungseinheit ein zweiter, zum ersten Bearbeitungsbereich axial versetzter Bereich des Presslings bearbeitbar ist.

Besonders bevorzugt weist das Nachbearbeitungsmodul für jede der zumindest zwei Bearbeitungseinheiten eine erste Führungseinheit, eine zweite Führungseinheit, ein dritte Führungseinheit, eine Rotationsführung und/oder ein Schwenkgelenk auf, um die zumindest zwei Bearbeitungseinheiten unabhängig voneinander zu Verfahren bzw. einem Pressling zuzustellen. Alternativ weist das Nachbearbeitungsmodul zumindest eine gemeinsame Führungseinheit für die zumindest zwei Bearbeitungseinheiten auf, um die zumindest zwei Bearbeitungseinheiten gemeinsam in zumindest eine Richtung zu verfahren. Beispielsweise ist eine gemeinsame Linearführung mit einem gemeinsamen Schlitten vorgesehen, auf der zwei Bearbeitungseinheiten auf gegenüberliegenden Seiten des Presslings bzw. der Hauptpressachse angeordnet sind. In dieser Ausgestaltung können beispielsweise beide Bearbeitungseinheiten als Bohreinheiten ausgebildet sein, um eine Bohrung durch den Pressling zu fertigen. In einem ersten Schritt kann eine Bohreinheit von einer ersten Seite in den Pressling bohren, ohne den Pressling vollständig zu durchbohren. Anschließend kann von der gegenüberliegenden Seite mit der zweiten Bohreinheit die Durchgangsbohrung vervollständigt werden. Da die Durchgangsbohrung nicht von einer Seite aus gefertigt wird, wird gewährleistet dass die Eintrittsöffnung der Durchgangsbohrung auf beiden Seiten sauber bzw. scharf ausgebildet ist. Wenn die Bohrachsen der beiden Bohreinheiten miteinander ausgerichtet sind, kann durch einfache Bewegungsabläufe (mit der gemeinsamen Linearführung) schnell und sauber eine Bohrung in einem Pressling hergestellt werden.

Vorzugsweise weist die Pressenanordnung eine am Pressengestell oder an einer Führungseinheit angeordnete Handhabungseinrichtung mit zumindest einem Greifer zum Greifen eines Presslings auf. Beispielsweise ist der oder sind die Greifer der Handhabungseinrichtung mittels einer Aktuatoreinrichtung einem zwischen den Stempeln eingespannten Pressling zustellbar, wobei insbesondere der oder die Greifer der Handhabungseinrichtung an einem schwenkbaren und/oder ausfahrbaren Arm bzw. an einem Manipulator angeordnet ist oder sind. Beispielsweise fährt nach der Bearbeitung des Presslings ein Oberstempel nach oben und der nachbearbeitete Pressling kann zum anschließenden Sintern mittels der Handhabungseinrichtung entnommen werden. Nachfolgend ist ein Verfahren zur Herstellung und Bearbeitung von Presslingen aus Pulvermaterial beschrieben. Das Verfahren wird mit einer wie oben beschriebenen Pressenanordnung durchgeführt.

Das Verfahren weist die Schritte des Anspruchs 14 auf.

Vorzugsweise wird zum Entformen des Presslings die Matrize nach unten verfahren oder die zumindest zwei Stempel werden nach oben verfahren. Alternativ wird zum Entformen des Presslings die Matrize nach oben verfahren oder die zumindest zwei Stempel werden gemeinsam nach unten verfahren. D.h. nach dem Entformen liegt die Matrize ober- oder unterhalb des Presslings, so dass die Seiten des Presslings zur Bearbeitung frei zugänglich sind.

Bevorzugt wird der Pressling nach dem zerspanenden Bearbeiten mittels einer Handhabungseinrichtung mit Greifer gegriffen, nachdem zumindest einer der zwei Stempel vom Pressling weggefahren ist, so dass der Pressling mittels der Handhabungseinrichtung aus der Presseinheit herausgenommen werden kann. Alternativ ist es auch möglich, dass der Pressling zuerst mit der Handhabungseinrichtung ergriffen wird und zumindest einer der zwei Stempel erst anschließend wegfährt. Der Pressling kann beispielsweise zum Weitertransport in eine Ablage abgelegt werden.

Einzelne Merkmale der oben und unten beschriebenen Ausführungen der Pressenanordnung und des Verfahrens zur Herstellung und Bearbeitung von Presslingen können auf beliebige Weise miteinander kombiniert werden.

Anhand der Figuren wird eine Ausführungsform der Erfindung näher erläutert. Es zeigen:
- Fig. 1a-b: eine schematische Seitenansicht einer Presseinheit einer Pressenanordnung,
- Fig. 2a-c: perspektivische Seitenansichten eines Teils einer Pressenanordnung mit Nachbearbeitungsmodul während der Nachbearbeitung eines Presslings, und
- Fig. 3: ein Detail der Pressenanordnung von Fig. 2a-c zur Darstellung der Nachbearbeitung des Presslings in vier Schritten i) bis iv).

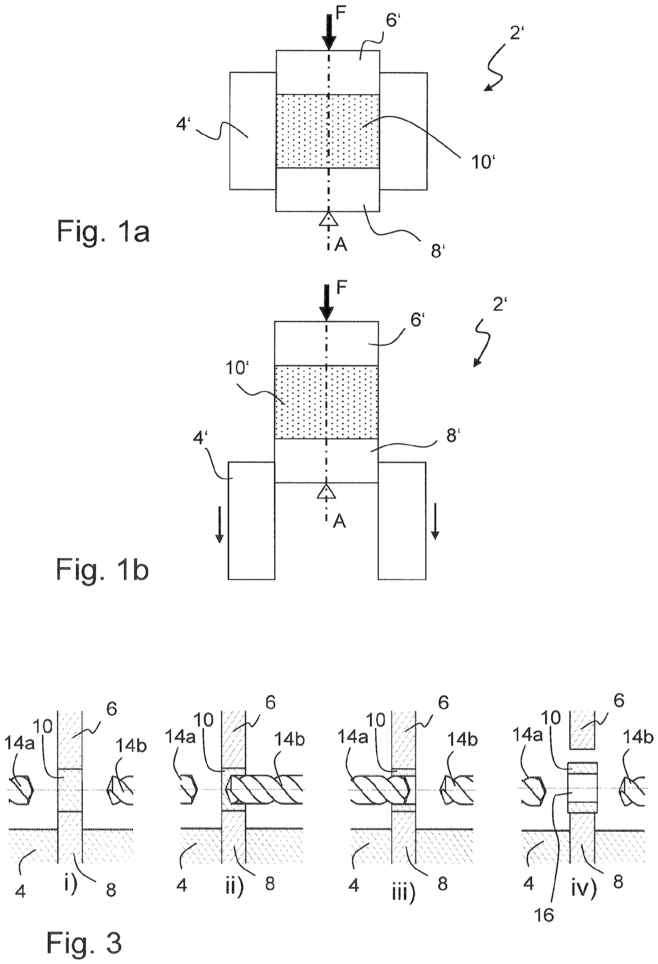

Fig. 1a-b zeigen eine schematische Seitenansicht eines Teils einer Presseinheit 2' einer Pressenanordnung mit Nachbearbeitungsmodul. Die Presseinheit 2' weist eine Matrize 4' mit einem Hohlraum auf, in den Pulvermaterial eingefüllt ist. Mittels eines Oberstempels 6' und Unterstempels 8' wird zusammen mit dem Hohlraum der Matrize 4' eine Pressform für einen Pressling 10' bereitgestellt. Verwendbare Pulvermaterialien sind z.B. Metallpulver oder Hartmetall- oder Cermet-Zusammensetzungen, insbesondere für Werkzeuge, wie beispielsweise Wendeschneidplatten. Die im folgenden beschriebenen Verfahren zum Herstellen und Bearbeiten eines Presslings mit der Pressenanordnung sind mittels einer Steuerung steuerbar.

In Fig. 1a ist die Presseinheit 2' während eines Pressvorgangs abgebildet, bei dem der Oberstempel 6' mittels einer Antriebseinheit entlang einer Hauptpressachse A gegen den feststehenden Unterstempel 6' verfahren wird, so dass auf das Pulvermaterial Druck ausgeübt wird und das Pulvermaterial zu einem Pressling 10' verpresst wird. Wie in Fig. 1b durch Pfeile angedeutet, wird nach dem Pressvorgang die Matrize 4' nach unten verfahren, so dass die Seiten des Presslings 10' frei liegen. Während des Entformens des Presslings 10' wird der Pressling 10' durch die beiden Stempel 6', 8' eingespannt gehalten. Eine Auflast F auf den Pressling 10' bleibt erhalten und sichert die Position des Presslings 10' in der Presseinheit 2'. Die effektive Kraft, die den Pressling 10' spannt, wird durch die Antriebseinheit erzeugt. Die beispielsweise pneumatisch, elektrisch oder hydraulisch erzeugte Haltekraft bzw. Spannkraft, die über die zumindest zwei Stempel 6', 8' auf den Pressling 10' wirkt, ist über die Steuerung steuerbar und/oder regelbar, beispielsweise direkt über eine gewählte Kraft.

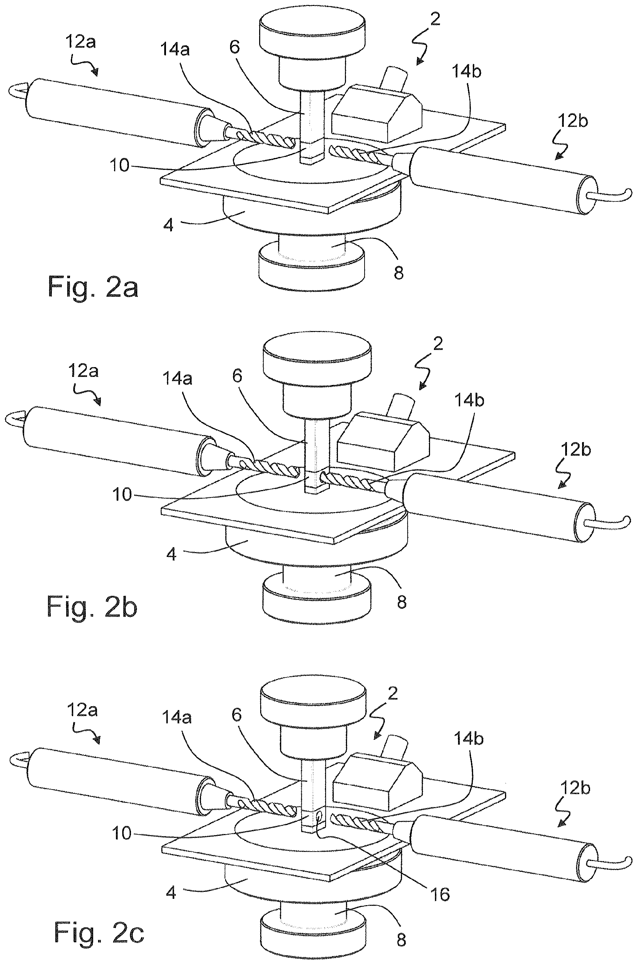

Fig. 2a-c zeigen perspektivische Seitenansichten eines Teils einer Pressenanordnung mit Nachbearbeitungsmodul. Elemente mit den gleichen Funktionen wie oben beschrieben weisen die gleichen Bezugszeichen auf.

Fig. 2a zeigt einen Pressling 10 nach dem Entformen aus der Matrize 4. Der Pressling 10 ist wie oben beschrieben zwischen dem Ober- und dem Unterstempel 6, 8 eingespannt und seine Seiten sind nach dem Entformen für eine Nachbearbeitung frei zugänglich. Alternativ zu dem dargestellten Beispiel ist es -je nach der vorzunehmenden Bearbeitung - auch möglich, den Pressling 10 vor der folgenden Bearbeitung nur teilweise zu Entformen.

Das Nachbearbeitungsmodul weist in dieser Ausgestaltung zwei Bohreinheiten 12a-b mit Bohrern 14a-b auf, die auf gegenüberliegenden Seiten des Presslings 10 bzw. der Hauptpressachse A angeordnet sind. Die Bohrer 14a-b der Bohreinheiten 12a-b sind axial zueinander ausgerichtet, so dass mit den beiden Bohrern 14a-b eine Durchgangsbohrung 16 im Pressling 10 hergestellt werden kann wie im folgenden beschrieben.

Fig. 3 stellt in seitlicher Schnittansicht den Ablauf i) - iv) bei der Herstellung der Durchgangsbohrung 16 schematisch dar. Die Bohreinheiten 12a-b sind jeweils auf einer Linearführung angeordnet, so dass jede Bohreinheit 12a-b unabhängig von der anderen Bohreinheit 12a-b dem Pressling 10 zugestellt werden kann. In einem ersten Schritt wird der Pressling von einer Seite mit einer ersten Bohreinheit 12b angebohrt, aber nicht durchbohrt (Fig. 3 ii), Fig. 2b). Anschließend wird die erste Bohreinheit 12b bzw. der Bohrer 14b wieder aus der Bohrung 16 herausgeführt (Fig. 2c) und mittels der zweiten Bohreinheit 12a bzw. des zweiten Bohrers 14a wird von der gegenüberliegenden Seite die Bohrung vervollständigt bzw. eine Durchgangsbohrung 16 erstellt (Fig. 3 iii)). Durch dieses Verfahren wird verhindert, dass beim vollständigen Durchbohren des Presslings auf der Austrittsseite des Bohrers 12b Teile des Presslings 10 abplatzen bzw. es wird gewährleistet, dass beide Bohrlochkanten sauber und scharf definiert sind. Wie in Fig. 3 iv) dargestellt, wird nach Fertigstellung der Bohrung 16 der Oberstempel 6 nach oben gefahren, so dass der bearbeitete Pressling 10 aus der Presseinheit 2 entnommen werden kann. Der nachbearbeitete Pressling 10 kann anschließend gesintert werden.

Alternativ können beide Bohreinheiten 12a-b auf einer gemeinsamen Linearführung bzw. auf einem gemeinsamen Schlitten angeordnet sein, so dass sich beim Zustellen einer ersten Bohreinheit zum Pressling die zweite Bohreinheit vom Pressling entfernt.

### Bezugszeichenliste

- 2, 2': Presseinheit
- 4, 4': Matrize
- 6, 6': Oberstempel
- 8, 8': Unterstempel
- 10, 10': Pressling / Pulvermaterial
- 12a-b: Bohreinheit
- 14a-b: Bohrer
- 16: Bohrung

- A: Hauptpressachse
- F: Auflast / Pressdruck

## Patentansprüche

1. Pressenanordnung mit Nachbearbeitungsmodul zur Herstellung und Bearbeitung von Presslingen aus Pulvermaterial, wobei die Pressenanordnung aufweist:
eine Steuerung,
ein Pressengestell,
eine am Pressengestell angeordneten Presseinheit (2, 2') zum Pressen eines Presslings (10, 10') aus Pulvermaterial,
wobei die Presseinheit (2, 2') aufweist:
eine Matrize (4, 4') mit einem Hohlraum zur Aufnahme von Pulvermaterial,
zumindest zwei Stempel (6, 8; 6', 8'), die zusammen mit dem Hohlraum eine Pressform für einen Pressling bereitstellen, und
zumindest eine Antriebseinheit zum Verfahren zumindest eines Stempels (6, 6') relativ zu zumindest einem zweiten Stempel (8, 8') entlang einer Pressachse (A) der Presseinheit, und
ein Nachbearbeitungsmodul mit zumindest einer Bearbeitungseinheit (12a-b) zur zerspanenden Bearbeitung eines Presslings (10, 10'),
wobei die Steuerung derart eingerichtet ist, dass sie einen Pressling (10, 10') nach einem Pressvorgang aus der Matrize (4, 4') zumindest teilweise entformt,
nach dem zumindest teilweisen Entformen zwischen den zumindest zwei Stempeln (6, 8; 6', 8') eingespannt hält, und
einen aus der Matrize (4, 4') zumindest teilweise entformten Pressling (10, 10'), der zwischen den zumindest zwei
Stempeln (6, 8; 6', 8') eingespannt gehalten ist, mit der zumindest einen Bearbeitungseinheit (12a-b) bearbeitet.

2. Pressenanordnung nach Anspruch 1, wobei die zumindest ein Bearbeitungseinheit (12a-b) eine Bohreinheit, eine Fräseinheit, eine Schleifeinheit oder einen Werkzeugträger aufweist.

3. Pressenanordnung nach Anspruch 1 oder 2, wobei das Nachbearbeitungsmodul am Pressengestell angeordnet ist.

4. Pressenanordnung nach Anspruch 1, 2 oder 3, wobei das Nachbearbeitungsmodul einen Manipulator aufweist an dessen Arbeitsende die zumindest eine Bearbeitungseinheit (12a-b) angeordnet ist.

5. Pressenanordnung nach einem der vorhergehenden Ansprüche, wobei das Nachbearbeitungsmodul zumindest eine Führungseinheit zum Zustellen der zumindest einen Bearbeitungseinheit (12a-b) zu einem eingespannten Pressling (10, 10') aufweist.

6. Pressenanordnung nach einem der vorhergehenden Ansprüche, wobei das Nachbearbeitungsmodul eine erste Führungseinheit zum Verfahren des zumindest einen Bearbeitungseinheit (12a-b) in eine erste Richtung aufweist, und
wobei das Nachbearbeitungsmodul eine zweite Führungseinheit zum Verfahren des zumindest einen Bearbeitungseinheit (12a-b) in eine nicht parallel zur ersten Richtung verlaufende zweite Richtung aufweist.

7. Pressenanordnung nach Anspruch 6, wobei das Nachbearbeitungsmodul eine dritte Führungseinheit zum Verfahren des zumindest einen Bearbeitungseinheit (12a-b) in eine nicht parallel zur ersten und zweiten Richtung verlaufende dritte Richtung aufweist.

8. Pressenanordnung nach einem der vorhergehenden Ansprüche, wobei das Nachbearbeitungsmodul ein Schwenkgelenk zum Schwenken des zumindest einen Bearbeitungseinheit (12a-b) um eine Schwenkachse aufweist.

9. Pressenanordnung nach einem der Ansprüche 1 bis 5, wobei das Nachbearbeitungsmodul eine am Pressengestell gelagerte Rotationsplattform aufweist auf der die zumindest eine Bearbeitungseinheit angeordnet ist, wobei die Rotationsplattform drehbar um die Pressachse ist.

10. Pressenanordnung nach einem der vorhergehenden Ansprüche, wobei das Nachbearbeitungsmodul zumindest zwei einem Pressling zustellbare Bearbeitungseinheiten (12a-b) aufweist, die bezüglich der Pressachse (A) diagonal oder symmetrisch gegenüberliegend angeordnet sind.

11. Pressenanordnung nach Anspruch 10, wobei das Nachbearbeitungsmodul für jede der zumindest zwei Bearbeitungseinheiten (12a-b) eine erste Führungseinheit, eine zweite Führungseinheit, ein dritte Führungseinheit, eine Rotationsführung und/oder ein Schwenkgelenk aufweist, um die zumindest zwei Bearbeitungseinheiten unabhängig voneinander einem eingespannten Pressling zuzustellen, oder
wobei das Nachbearbeitungsmodul zumindest eine gemeinsame Führungseinheit für die zumindest zwei Bearbeitungseinheiten aufweist, um zumindest zwei Bearbeitungseinheiten gemeinsam in eine Richtung zu verfahren.

12. Pressenanordnung nach einem der vorhergehenden Ansprüche, wobei die Pressenanordnung eine am Pressengestell oder an einer Führungseinheit angeordnete Handhabungseinrichtung mit zumindest einem Greifer zum Greifen eines Presslings aufweist.

13. Pressenanordnung nach Anspruch 12, wobei der oder die Greifer der Handhabungseinrichtung mittels einer Aktuatoreinrichtung einem zwischen den Stempeln eingespannten Pressling zustellbar ist oder sind.

14. Verfahren zur Herstellung und Bearbeitung von Presslingen (10, 10') aus Pulvermaterial, das die Schritte aufweist:
Einfüllen eines Pulvermaterials in einen Hohlraum einer Matrize (4, 4'),
Pressen des Pulvermaterials mittels zumindest zwei Stempeln (6, 8; 6', 8') in Richtung einer Pressachse (A) zu einem Pressling (10, 10'),
zumindest partielles Entformen des Presslings (10, 10') aus dem Hohlraum, wobei der Pressling zwischen den zumindest zwei Stempeln (6, 8; 6', 8') eingespannt gehalten wird,
zerspanende Bearbeiten des Presslings (10, 10') mittels zumindest einer Bearbeitungseinheit (12a-b) während der Pressling zwischen den zumindest zwei Stempeln (6, 8; 6', 8') eingespannt gehalten ist.

15. Verfahren nach Anspruch 14, wobei zum Entformen des Presslings (10, 10') die Matrize (4, 4') nach unten verfahren wird oder die zumindest zwei Stempel (6, 8; 6', 8') nach oben verfahren werden, oder
wobei zum Entformen des Presslings (10, 10') die Matrize (4, 4') nach oben verfahren wird oder die zumindest zwei Stempel (6, 8; 6', 8') nach unten verfahren werden.

16. Verfahren nach Anspruch 14 oder 15, wobei das Verfahren nach dem zerspanenden Bearbeiten die Schritte aufweist:
Wegfahren von zumindest einem der zwei Stempel (6, 6') vom Pressling;
Greifen des Presslings mittels einer Handhabungseinrichtung mit Greifer, und
Entnehmen des Presslings mittels der Handhabungseinrichtung.

## Claims

1. A press arrangement with a further processing module for producing and processing compacts from powder material, wherein the press arrangement has:
a controller,
a press frame,
a pressing unit (2, 2'), which is arranged on the press frame, for pressing a compact (10, 10') from powder material,
wherein the pressing unit (2, 2') has:
a die (4, 4') with a cavity for receiving powder material,
at least two punches (6, 8; 6', 8') which, together with the cavity, provide a mold for a compact, and
at least one drive unit for moving at least one punch (6, 6') relative to at least one second punch (8, 8') along a pressing axis (A) of the pressing unit,
and
a further processing module with at least one processing unit (12a-b) for machining a compact (10, 10'),
wherein the controller is adapted such that it at least partially ejects a compact (10, 10') from the die (4, 4') after a pressing operation,
after the at least partial ejection, holds said compact clamped between the at least two punches (6, 8; 6', 8'), and
processes a compact (10, 10'), which is at least partially ejected from the die (4, 4') and is held clamped between the at least two punches (6, 8; 6', 8'), with the at least one processing unit (12a-b).

2. The press arrangement as claimed in claim 1, wherein the at least one processing unit (12a-b) has a drilling unit, a milling unit, a grinding unit or a tool carrier.

3. The press arrangement as claimed in claim 1 or 2, wherein the further processing module is arranged on the press frame.

4. The press arrangement as claimed in claim 1, 2 or 3, wherein the further processing module has a manipulator, at the working end of which the at least one processing unit (12a-b) is arranged.

5. The press arrangement as claimed in one of the preceding claims, wherein the further processing module has at least one guide unit for advancing the at least one processing unit (12a-b) to a clamped compact (10, 10').

6. The press arrangement as claimed in one of the preceding claims, wherein the further processing module has a first guide unit for moving the at least one processing unit (12a-b) in a first direction, and
wherein the further processing module has a second guide unit for moving the at least one processing unit (12a-b) in a second direction not running parallel to the first direction.

7. The press arrangement as claimed in claim 6, wherein the further processing module has a third guide unit for moving the at least one processing unit (12a-b) in a third direction not running parallel to the first and second direction.

8. The press arrangement as claimed in one of the preceding claims, wherein the further processing module has a pivoting joint for pivoting the at least one processing unit (12a-b) about a pivot axis.

9. The press arrangement as claimed in one of claims 1 to 5, wherein the further processing module has a rotation platform which is mounted on the press frame and on which the at least one processing unit is arranged, wherein the rotation platform is rotatable about the pressing axis.

10. The press arrangement as claimed in one of the preceding claims, wherein the further processing module has at least two processing units (12a-b) which can be advanced to a compact, which are arranged diagonally or symmetrically opposite each other with respect to the pressing axis (A).

11. The press arrangement as claimed in claim 10, wherein the further processing module for each of the at least two processing units (12a-b) has a first guide unit, a second guide unit, a third guide unit, a rotation guide and/or a pivoting joint in order to advance the at least two processing units independently of one another to a clamped compact, or wherein the further processing module has at least one common guide unit for the at least two processing units in order to move at least two processing units jointly in one direction.

12. The press arrangement as claimed in one of the preceding claims, wherein the press arrangement has a handling device which is arranged on the press frame or on a guide unit and has at least one gripper for gripping a compact.

13. The press arrangement as claimed in claim 12, wherein the gripper or the grippers of the handling device can be advanced by means of an actuator device to a compact clamped between the punches.

14. A method for producing and processing compacts (10, 10') from powder material, which has the following steps:
pouring a powder material into a cavity of a die (4, 4'),
pressing the powder material by means of at least two punches (6, 8; 6', 8') in the direction of a pressing axis (A) to form a compact (10, 10'),
at least partially ejecting the compact (10, 10') from the cavity, wherein the compact is held clamped between the at least two punches (6, 8; 6', 8'),
machining the compact (10, 10') by means of at least one processing unit (12a-b) while the compact is held clamped between the at least two punches (6, 8; 6', 8').

15. The method as claimed in claim 14, wherein, in order to eject the compact (10, 10'), the die (4, 4') is moved downward or the at least two punches (6, 8; 6', 8') are moved upward, or
wherein, in order to eject the compact (10, 10'), the die (4, 4') is moved upward or the at least two punches (6, 8; 6', 8') are moved downward.

16. The method as claimed in claim 14 or 15, wherein, after the machining, the method has the following steps:
moving at least one of the two punches (6, 6') away from the compact;
gripping the compact by means of a handling device with grippers, and
removing the compact by means of the handling device.

## Revendications

1. Dispositif de pressage muni d'un module de post-traitement pour la fabrication et l'usinage de pièces à partir d'une matière en poudre, le dispositif de pressage comprenant :
une commande,
un bâti de pressage,
une unité de pressage (2, 2') disposée au niveau du bâti de pressage et destinée à presser une pièce (10, 10') à partir d'une matière en poudre,
l'unité de pressage (2, 2') comportant :
une matrice (4, 4') pourvue d'une cavité destinée à recevoir une matière en poudre,
au moins deux poinçons (6, 8 ; 6', 8') qui forment conjointement avec la cavité un moule de pressage destiné à une pièce, et
au moins une unité d'entraînement destinée à déplacer au moins un poinçon (6, 6') par rapport à au moins un deuxième poinçon (8, 8') le long d'un axe de pressage (A) de l'unité de pressage, et
un module de post-traitement muni d'au moins une unité d'usinage (12a-b) destinée à l'usinage d'une pièce (10, 10') par enlèvement de copeaux,
la commande étant conçue pour démouler au moins partiellement une pièce (10, 10') de la matrice (4, 4') après une opération de pressage et après le démoulage au moins partiel entre les au moins deux poinçons (6, 8 ; 6', 8') à serrer, et pour maintenir une pièce (10, 10'), au moins partiellement démoulée de la matrice (4, 4'), serrée entre les au moins deux poinçons (6, 8 ; 6', 8'), et pour l'usiner avec l'au moins une unité d'usinage (12a-b).

2. Dispositif de pressage selon la revendication 1, l'au moins une unité d'usinage (12a-b) comprenant une unité de perçage, une unité de fraisage, une unité de meulage ou un porte-outil.

3. Dispositif de pressage selon la revendication 1 ou 2, le module de post-traitement étant disposé au niveau du bâti de pressage.

4. Dispositif de pressage selon la revendication 1, 2 ou 3, le module de post-traitement comportant un manipulateur au niveau de l'extrémité de travail duquel est disposée l'au moins une unité d'usinage (12a-b).

5. Dispositif de pressage selon l'une des revendications précédentes, le module de post-traitement comportant au moins une unité de guidage destinée à rapprocher l'au moins une unité d'usinage (12a-b) d'une pièce (10, 10') serrée.

6. Dispositif de pressage selon l'une des revendications précédentes, le module de post-traitement comprenant une première unité de guidage destinée à déplacer l'au moins une unité d'usinage (12a-b) dans une première direction, et le module de post-traitement comprenant une deuxième unité de guidage destinée à déplacer l'au moins une unité d'usinage (12a-b) dans une deuxième direction non parallèle à la première direction.

7. Dispositif de pressage selon la revendication 6, le module de post-traitement comprenant une troisième unité de guidage destinée à déplacer l'au moins une unité d'usinage (12a-b) dans une troisième direction non parallèle aux première et deuxième directions.

8. Dispositif de pressage selon l'une des revendications précédentes, le module de post-traitement comportant une articulation pivotante destinée à faire pivoter l'au moins une unité d'usinage (12a-b) sur un axe de pivotement.

9. Dispositif de pressage selon l'une des revendications 1 à 5, le module de post-traitement comprenant une plate-forme de rotation montée sur le bâti de pressage sur lequel est disposée l'au moins une unité d'usinage, la plate-forme de rotation pouvant tourner sur l'axe de pressage.

10. Dispositif de pressage selon l'une des revendications précédentes, le module de post-traitement comprenant au moins deux unités d'usinage (12a-b) qui peuvent être rapprochées d'une pièce et qui sont disposées de manière diagonalement ou symétriquement opposée par rapport à l'axe de pressage (A).

11. Dispositif de pressage selon la revendication 10, le module de post-traitement comprenant pour chacune des au moins deux unités d'usinage (12a-b) une première unité de guidage, une deuxième unité de guidage, une troisième unité de guidage, un guide en rotation et/ou une articulation pivotante pour rapprocher les au moins deux unités d'usinage, indépendamment l'une de l'autre, d'une pièce serrée, ou le module de post-traitement comprenant pour les au moins deux unités d'usinage au moins une unité de guidage commune pour déplacer au moins deux unités d'usinage conjointement dans une direction.

12. Dispositif de pressage selon l'une des revendications précédentes, le dispositif de pressage comprenant un système de manipulation qui est disposé au niveau du bâti de pressage ou au niveau d'une unité de guidage et qui comporte au moins un élément de préhension destiné à prendre une pièce.

13. Dispositif de pressage selon la revendication 12, l'au moins un élément de préhension du dispositif de manipulation pouvant être rapproché d'une pièce, serrée entre les poinçons, au moyen d'un système d'actionnement.

14. Procédé de fabrication et d'usinage de pièces (10, 10') à partir d'une matière en poudre, le procédé comprenant les étapes suivantes :
remplir une cavité d'une matrice (4, 4') avec une matière en poudre,
presser la matière en poudre au moyen d'au moins deux poinçons (6, 8 ; 6', 8') en direction d'un axe de pressage (A) pour obtenir une pièce (10, 10'),
démouler au moins partiellement la pièce (10, 10') de la cavité, la pièce étant maintenue serrée entre les au moins deux poinçons (6, 8 ; 6', 8'),
usiner la pièce (10, 10') par enlèvement de copeaux au moyen d'au moins une unité d'usinage (12a-b) pendant que la pièce est maintenue serrée entre les au moins deux poinçons (6, 8 ; 6', 8').

15. Procédé selon la revendication 14, la matrice (4, 4') étant déplacée vers le bas, ou au moins deux poinçons (6, 8 ; 6', 8') étant déplacés vers le haut, pour effectuer le démoulage de la pièce (10, 10') ou la matrice (4, 4') étant déplacée vers le haut, ou au moins deux poinçons (6, 8 ; 6', 8') étant déplacés vers le bas, pour effectuer le démoulage de la pièce (10, 10').

16. Procédé selon la revendication 14 ou 15,
le procédé comprenant après l'usinage par enlèvement de copeaux les étapes suivantes :
écarter l'un au moins des deux poinçons (6, 6') de la pièce ;
prendre la pièce à l'aide d'un dispositif de manipulation pourvu d'un élément de préhension et
retirer la pièce à l'aide du dispositif de manipulation.
